# EUROPÄISCHE PATENTSCHRIFT

(11) **EP 1 927 560 B1**
(45) Veröffentlichungstag und Bekanntmachung des Hinweises auf die Patenterteilung: **26.05.2010**
(21) Anmeldenummer: 08004379.7
(22) Anmeldetag: 27.07.2006
(51) Int. Cl.: B65G 47/71, B65G 47/84

(54) **Vorrichtung und Verfahren zum Aufteilen eines Stroms von Gegenständen**
Device and method for splitting object flows
Dispositif et procédé destinés à la répartition d'un flux d'objets

(43) Veröffentlichungstag der Anmeldung: 04.06.2008
(62) Teilanmeldung aus: 06015728.6
(73) Patentinhaber: INDAG Gesellschaft für Industriebedarf mbH & Co. Betriebs KG, 69214 Eppelheim (DE)
(72) Erfinder: Wild, Hans-Peter, Dr., 69214 Eppelheim (DE); Kraft, Eberhard, 74924 Neckarbischofsheim (DE); Lechert, Frank, 69469 Weinheim (DE)
(74) Vertreter: Grünecker, Kinkeldey, Stockmair & Schwanhäusser Anwaltssozietät

(56) Entgegenhaltungen:
- CH-A5- 617 150
- GB-A- 1 392 956
- US-A- 5 042 636

## Beschreibung

Die Erfindung betrifft eine Vorrichtung und ein Verfahren zum Aufteilen eines Stroms von Gegenständen, wie etwa Getränkebehältern, in zwei oder mehr Ströme. Zum Aufteilen eines Stroms von Gegenständen in zwei oder mehr Ströme ist es möglich, einzelne Gegenstände des Stroms seitlich herauszuschieben. Um einzelne Gegenstände aus einem Strom von Gegenständen herauszuschieben sind beispielsweise Nocken oder Stößel bekannt, die einem Gegenstand von der Seite einen Impuls geben, so dass sich dieser seitlich aus dem Strom herausbewegt.

Bei sehr hohen Durchsatzraten und dicht aufeinanderfolgenden Gegenständen ist die Geschwindigkeit, mit der ein Gegenstand seitlich herausgeschoben werden muss, sehr hoch. Dies führt gerade bei flexiblen Gegenständen, wie etwa Folienbeuteln, jedoch zu unerwünschten Verformungen.

Die US-A-5 042 636 zeigt eine Vorrichtung und ein Verfahren zum Verlagern von geförderten Gegenständen gemäß dem Oberbegriff der Ansprüche 1, 15 und 17, 18.

Aufgabe der vorliegenden Erfindung ist es daher, eine Vorrichtung und ein Verfahren zum Aufteilen eines Stroms von Gegenständen zur Verfügung zu stellen, bei dem die Gegenstände vergleichsweise sanft behandelt werden und dennoch hohe Durchsatzraten möglich sind.

Diese Aufgabe wird gelöst mit einer Vorrichtung nach den Ansprüchen 1 und 15 sowie einem Verfahren nach den Ansprüchen 17 oder 18. Vorteilhafte Ausführungsformen sind in den Unteransprüchen offenbart.

Bei der Vorrichtung ist ein Schieber vorgesehen, der in einem Winkel von weniger als 90° zu der Förderrichtung der Gegenstände bewegt werden kann. Dadurch wird erreicht, dass der Schieber mit einer Bewegungskomponente in Richtung der Förderrichtung mit dem zu schiebenden Gegenstand mitläuft. Dadurch ist es möglich, den Schieber in eine Richtung quer zur Förderrichtung relativ langsam zu bewegen, sodass der Gegenstand vergleichsweise sanft verschoben werden kann. Durch das Mitbewegen des Schiebers in Richtung der Förderrichtung steht für das Herausschieben des Gegenstands mehr Zeit zur Verfügung, sodass das Herausschieben selbst relativ langsam erfolgen kann.

Der Winkel unter dem sich der Schieber im Vergleich zu der Förderrichtung bewegen kann, kann weniger als 70°, 60°, 50°, 45°, 40°, 30° oder 20° betragen. Andererseits ist er vorteilhafterweise höher als 5°, 10°, 15° oder 20°, sodass die Strecke entlang der Schieber bewegt werden muss, nicht übermäßig lang wird. Vorteilhaft ist insbesondere ein Winkelbereich zwischen 15° und 25°.

Vorteilhaft ist es weiterhin, die Gegenstände auf einen anderen Förderer zu schieben. Dadurch können die beiden erzeugten Ströme von Gegenständen unabhängig voneinander in verschiedene Richtungen und/oder mit verschiedenen Geschwindigkeiten transportiert werden. Es ist jedoch auch möglich, die Gegenstände lediglich auf ein- und demselben Förderer in zwei Ströme aufzuteilen, wobei die beiden Ströme dann nebeneinander auf einem Förderer angeordnet sind, dann jedoch vorteilhafterweise durch entsprechende Maßnahmen wie Leiteinrichtungen, Geländer o. ä. getrennt weiter verarbeitet werden.

Werden zwei verschiedene Förderer für die zwei Produktströme eingesetzt, so können diese Förderer so ausgestaltet werden, dass sich zwei Gegenstände auf den verschiedenen Förderern an einer bestimmten Stelle nebeneinander befinden. Dies erleichtert zum Beispiel die Übergabe der Gegenstände an eine weitere Maschine, wie etwa eine Verpackungsmaschine. Die beiden Gegenstände können dann in etwa gleichzeitig an die weitere Maschine übergeben werden. Hierzu können die beiden Förderer der beiden Produktströme beispielsweise mit unterschiedlichen Geschwindigkeiten fördern, so dass ein Gegenstand auf einem Förderer einen Gegenstand auf dem anderen Förderer einholt. Auch kann sich an einen der beiden Förderer ein Förderer mit einer anderen Fördergeschwindigkeit anschließen. Dabei haben die ersten beiden Förderer dann vorzugsweise eine in etwa gleiche Fördergeschwindigkeit. Auch kann sich an beide ersten Förderer jeweils ein Förderer anschließen, wobei diese beiden weiteren Förderer dann unterschiedliche Fördergeschwindigkeiten haben.

Auch können die beiden Förderer oder (ein) sich daran anschließende(r) Förderer der beiden Produktströme unterschiedlich geformte Wege durchlaufen, um so zu erreichen, dass sich an einer gewissen Stelle Gegenstände auf den zwei Förderern nebeneinander befinden. Dies kann zum Beispiel durch kurvenförmige Förderer erreicht werden.

Zur Trennung der beiden Ströme ist es vorteilhaft, wenn die Gegenstände in einer Richtung senkrecht zu der Förderrichtung, um mindestens die Ausdehnung der Gegenstände in diese Richtung geschoben werden. Dadurch werden die beiden oder mehr erzeugten Ströme von Gegenständen klar voneinander getrennt.

Vorteilhaft ist eine Ausführungsform, bei der der Schieber an einem Band oder einer Kette angeordnet ist, das über mindestens zwei Umlenkwalzen geführt ist. Dadurch kann der Schieber an dem Band umlaufen und so nach dem Schieben eines Gegenstandes zu der Position, bei der das Schieben beginnt, zurückgeführt werden, ohne jedoch den Bereich der Gegenstände zu durchlaufen, so dass Kollisionen zwischen dem rücklaufenden Schieber und anderen Gegenständen ausgeschlossen sind. Hierbei ist es insbesondere vorteilhaft, an dem Band oder der Kette mindestens zwei, drei, vier oder noch bevorzugterweise fünf oder mehr Schieber anzuordnen. Dadurch kann ein Schieber einen Gegenstand schieben, während ein anderer oder mehrere andere Schieber in die Ausgangsposition zurücklaufen. Auch ergibt sich bei drei, vier, fünf oder mehr Schiebern die Möglichkeit, mehr Zeit und Raum für die Umlenkung der Schieber um die Umlenkwalzen zur Verfügung zu haben. Dadurch ist es möglich, die Umlenkwalzen nicht so dicht wie möglich zusammen anzuordnen, sondern etwas mehr Platz zu lassen, was die Konstruktion erleichtert.

Vorteilhaft ist weiterhin eine Ausführungsform, bei der mehrere Schieber gleichzeitig verschiedene Gegenstände bewegen können, wobei dies auch die Möglichkeit betrifft, dass mehrere Schieber durch verschiedene Mittel angetrieben werden, was bedeutet, dass sie nicht an ein- und demselben Band angeordnet sind, sondern an beispielsweise verschiedenen Bändern nebeneinander. Mit dieser Maßnahme kann eine deutliche Kapazitätserhöhung erreicht werden, da dann auch sehr viele Gegenstände verschoben werden können. Mit einer solchen Einrichtung ist es beispielsweise möglich,
eine Eins-zu-Eins-Aufteilung der Gegenstände auf die zwei Ströme zu erreichen, obwohl eine bestimmte Schiebereinrichtung nur jeden vierten oder jeden sechsten Gegenstand erfassen muss. Ob jeder vierte, sechste oder achte Gegenstand erfasst wird, hängt davon ab, ob gleichzeitig zwei, drei oder vier Gegenstände bewegt werden können. Die verschiedenen Gegenstände können dabei zum Beispiel gleichzeitig losgeschoben werden. Sie können auch zu verschiedenen Zeiten losgeschoben werden. Ab dem Zeitpunkt des Anschiebens des zweiten Gegenstandes bis zum Abstoppen einer der beiden Gegenstände werden beide Gegenstände bewegt, also gleichzeitig bewegt bzw. geschoben. Vorteilhaft ist es hierbei, wenn mehrere Schieberstrecken bzw. Schiebereinrichtungen parallel nebeneinander angeordnet sind.

Bei der Vorrichtung die Schieber umklappbar angeordnet sind. Dies ist zum Einen dazu vorteilhaft, das Schieben der Gegenstände bei der gewünschten Position zu beenden. Durch ein Umklappen der Schieber aus ihrer Schiebeposition heraus wird das Schieben des Gegenstandes beendet (Das Schieben kann auch durch Anhalten des Schiebers erreicht werden; siehe weiter unten). Weiterhin wird dadurch sichergestellt, dass andere bereits geschobene Gegenstände durch den Schieber nicht erfasst werden. Zum Umklappen kann beispielsweise eine feststehende Führung vorgesehen sein, die so angeordnet ist, dass die Schieber dagegen laufen und durch die feststehende Führung an einer vorbestimmten Stelle umgeklappt werden.

Bei der Vorrichtung die Schieber mit einem federnden Element in eine Schiebeposition (nicht umgeklappt) vorzuspannen. Dadurch wird erreicht, dass die Schieber in der Schiebeposition verbleiben, auch wenn sie mit einer gewissen Kraft gegen den zu schiebenden Gegenstand drücken. Diese Kraft dient zum Schieben der Gegenstände.

Weiter kann vorteilhafterweise ein Sensor (oder auch mehrere Sensoren) eingesetzt werden, mit dem ein Gegenstand auf dem Förderer erkannt wird. Der Sensor kann dann die Bewegung des Schiebers auslösen. Dies ist insbesondere dann vorteilhaft, wenn die Gegenstände nicht zu genau vordefinierten Zeiten auf dem Förderer einlaufen, sondern etwas unregelmäßig ankommen. Bei recht genau einlaufenden Gegen-
ständen kann ein Sensor aber auch entfallen. Je Schieberstrecke ist vorzugsweise ein Sensor vorgesehen. Die Sensoren bzw. die Auslösung der Schieberbewegung muss so ausgebildet sein, dass die gewünschte Aufteilung des Produktstroms erfolgt. d.h. nicht jeder Gegenstand, der von dem Sensor erfasst wird, muss auch eine Bewegung des Schiebers auslösen, vielmehr sollen einige Gegenstände eine Schiebertrecke passieren ohne verschoben zu werden.

Bei einer Vorrichtung zum Aufteilen eines Stroms von Gegenständen sind mindestens zwei Schieber (z. B. an verschiedenen Schiebeeinrichtungen) vorgesehen, die Gegenstände auf einem Förderer relativ zu anderen Gegenständen des Förderers bewegen können. Mit zwei Schiebern können auch bei hohen Durchsatzraten viele Gegenstände herausgeschoben werden, da jeder Schieber bzw. jede Schiebeeinrichtung nur jeden zweiten zu schiebenden Gegenstand oder jeden dritten oder jeden vierten oder jeden fünften oder jeden sechsten zu schiebenden Gegenstand schieben muss. Die Schieber bzw. die Schieberstrecken sind dazu vorzugsweise nebeneinander und vorzugsweise parallel zueinander angeordnet.

Bei dem Verfahren zum Aufteilen eines Stroms von Gegenständen werden die Gegenstände in einem Winkel von weniger als 90° zu der Förderrichtung geschoben. Dadurch können die Gegenstände relativ sanft verschoben werden, da für das Verschieben mehr Zeit zur Verfügung steht, als wenn sie in einem Winkel senkrecht zu der Förderrichtung herausgeschoben werden.

Bei einem anderen Verfahren zum Aufteilen eines Stroms von Gegenständen werden mindestens zwei Gegenstände zumindest teilweise gleichzeitig geschoben, um so höhere Kapazitäten zu erreichen.

Bei dem Verfahren kann der Schiebevorgang durch das Wegklappen eines Schiebers oder durch das Anhalten des Schiebers beendet werden.

Die Vorrichtung oder das Verfahren können dazu dienen, eine Eins-zu-Eins-Aufteilung des Stroms von Gegenständen in zwei Ströme zu erreichen. Dies bedeutet, dass in den beiden Strömen gleich viele Gegenstände vorhanden sind. Es ist jedoch auch
eine andere Aufteilung, wie Eins-zu-Zwei, Eins-zu-Drei, Eins-zu-Vier oder Ähnliches möglich. Auch können drei oder mehr Ströme erzeugt werden, durch das Verschieben der Gegenstände auf drei verschiedene Linien.

Vorteilhafte Ausführungsformen der Erfindung sollen anhand er beiliegenden Figuren erläutert werden. Dabei zeigt:
- Figur 1: eine schematische Draufsicht auf eine Vorrichtung zum Aufteilen eines Stroms von Gegenständen;
- Figur 2: eine dreidimensionale schematische perspektivische Ansicht auf eine Vorrichtung;
- Figur 3: eine dreidimensionale schematische perspektivische Ansicht eines Schiebers;
- Figur 4: eine schematische Seitenansicht einer Schiebevorrichtung; und
- Figur 5: schematische Ansichten des Abförderbereichs.

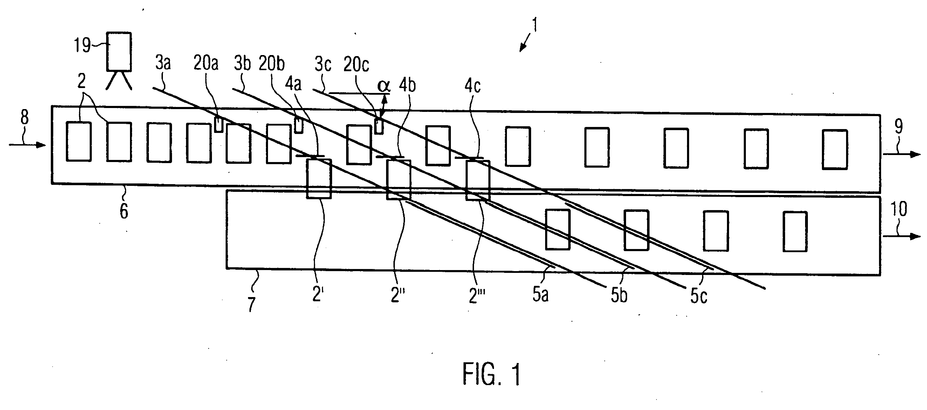

In Figur 1 ist ein Förderer 6 gezeigt, auf dem Gegenstände 2 in regelmäßiger Anordnung angeordnet sind. Sie können auch leicht unregelmäßig einlaufen. Sie können mit dem Förderer 6 in Förderrichtung 8 transportiert werden. Neben dem Förderer 6 ist,ein weiterer Förderer 7 angeordnet, auf den einige der Gegenstände 2 überführt werden sollen. Die Gegenstände 2 können beispielsweise Folienbeutel sein, die liegend transportiert werden. Die Folienbeutel können beispielsweise Standbodenbeutel sein, die mit der Bodenseite in Figur 1 nach oben hin ausgerichtet sind.

Über dem Förderer 6 und 7 sind Schiebeeinrichtungen 3 a, 3 b, 3 c angeordnet. Auch wenn hier drei Schiebereinrichtungen 3 a, 3 b, 3 c gezeigt sind, können auch mehr oder weniger Schiebereinrichtungen, wie beispielsweise nur eine, zwei, oder vier oder mehrere Schiebereinrichturigen vorgesehen sein. An jeder Schiebeeinrichtung 3 a,
3 b, 3 c ist ein Schieber 4 a, 4 b, 4 c angeordnet, der entlang der Schiebeeinrichtung 3 a, 3 b, 3 c (Schiebestrecke) bewegt werden kann.

Über oder bei dem Förderer 6 können Sensoren 19, 20 a, 20 b, 20 c angeordnet sein, die erkennen, dass ein Gegenstand 2 einläuft. Die so gewonnene Information kann genutzt werden, um eine der Schiebeeinrichtungen 3 a, 3 b, 3 c anzusteuern, um den erfassten Gegenstand 2 auf den anderen Förderer 7 zu schieben. Mit Hilfe der Sensoren 19, 20 a, 20 b, 20 c kann das Aufteilen des Produktstroms auch bei etwas unregelmäßig einlaufenden Gegenständen 2 erfolgen. Es kann ein Sensor 20 a, 20 b, 20 c für jede Schiebeeinrichtung 3 a, 3 b, 3 c vorgesehen sein oder aber auch nur oder zusätzlich ein gemeinsamer Sensor 19 vor der ersten Schiebeeinrichtung 3 a.

Wie in Figur 1 zu erkennen, weist die Bewegungsrichtung der Schieber 4 a, 4 b, 4 c mit der Förderrichtung 8 einen Winkel α von ca. 20° bis 25 ° auf. Die Schieber 4 a, 4 b, 4 c können einen Gegenstand 2 an der in Figur 1 nach oben weisenden Seite angreifen und in Richtung zu dem Förderer 7 schieben. Durch die Schräganordnung der Schiebereinrichtungen 3 a, 3 b, 3 c kann der Schieber 4 a, 4 b, 4 c jeweils in Förderrichtung 8 mitlaufen und dabei die Gegenstände 2', 2", 2'" in eine Richtung senkrecht zu der Förderrichtung 8 relativ zu den Gegenständen 2 bewegen.

Jede Schiebereinrichtung 3 a, 3 b, 3 c umfasst eine Führung 5 a, 5 b, 5 c mit denen die Schieber 4 a, 4 b, 4 c umgeklappt werden können, sodass ihre Schiebewirkung beendet werden kann. Durch die Anordnung der Führungen 5 a, 5 b, 5 c wird festgelegt, bis wohin die Gegenstände 2', 2", 2'" geschoben werden. Das Ende der Schiebebewegung kann auch durch ein kurzes Anhalten des Schiebers erreicht werden, wobei der Gegenstand dann durch den Förderer von dem Schieber wegbewegt wird.

Die Schiebevorrichtungen 3 a, 3 b, 3 c in Figur 1 sind so ausgestaltet, dass die Gegenstände 2', 2", 2'" vollständig von dem Förderer 6 heruntergeschoben werden. Sie werden also beispielsweise, wie in Figur 1 gezeigt, in etwa mittig auf den Förderer 7 aufgeschoben. Auf den Förderern 6, 7 können die beiden gebildeten Ströme von Gegenständen in Richtung 9, 10 abgefördert werden.

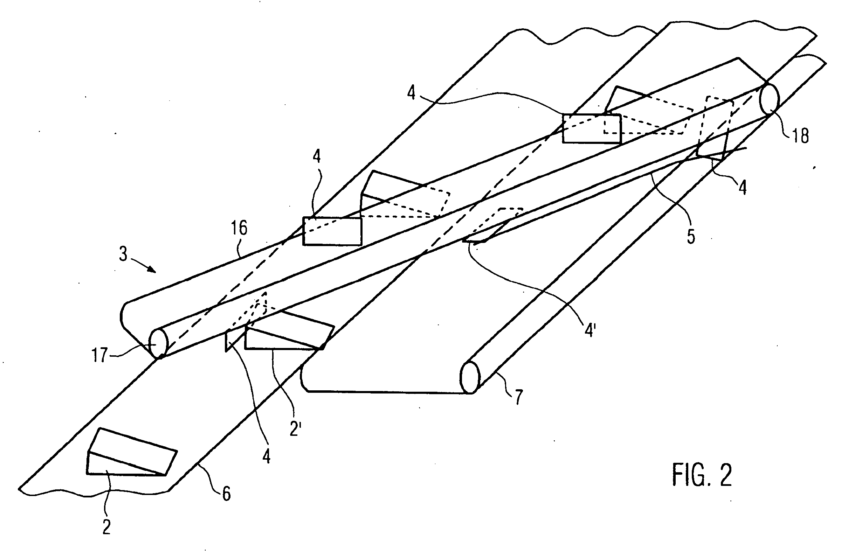

In Figur 2 ist eine Schiebevorrichtung 3 mit fünf Schiebern 4, 4' in perspektivischer Ansicht dargestellt. Die Schieber 4, 4' sind an einem umlaufenden Band 16 jeweils auf der Außenseite angeordnet. Das Band 16 ist über zwei Umlenkrollen 17, 18 geführt. Eine von diesen beiden Rollen kann mit einem entsprechenden Motor angetrieben werden, der hier der Übersichtlichkeit halber nicht dargestellt ist.

In Figur 2 ist zu erkennen, dass die Gegenstände 2 eine Standbodenbeutelform haben können, wobei der Boden in Figur 2 nach links hin ausgerichtet ist. An dieser Seite können die Schieber 4 besonders gut angreifen.

Die Schieber 4, 4' sind so angeordnet, dass sie auf der Unterseite der Schiebervorrichtung 3 von dem Förderer 6 in Richtung zu dem Förderer 7 bewegt werden können. Der auf der Oberseite der Schiebervorrichtung 3 ersichtliche Schieber 4 wird aus Richtung von dem Förderer 7 zu dem Förderer 6 zurückgeführt. Die Schieber 4, 4' laufen so an dem Band 16 um.

Eine Führung 5 ist seitlich neben dem Band 16 angeordnet, wobei die Schieber 4 gegen die Führung 5 laufen können, um so, wie bei dem Schieber 4' gezeigt, nach oben hin umklappen können. Dabei liegen die Schieber 4' in der umgeklappten Position in etwa parallel zu dem Band 16.

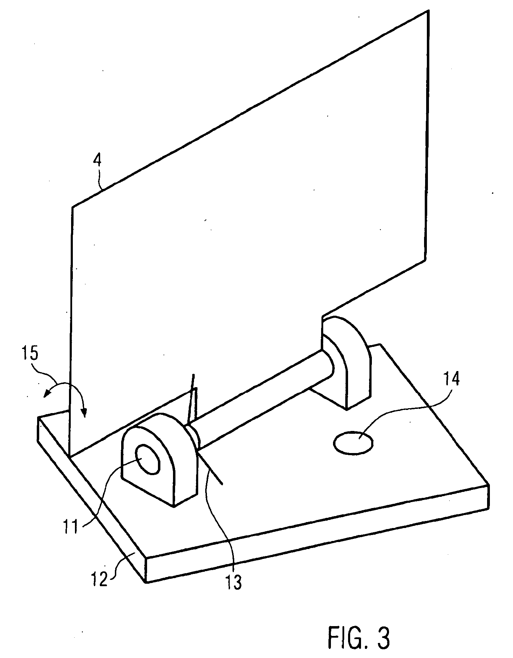

In Figur 3 ist eine Halterung eines Schiebers 4 schematisch dargestellt. Der Schieber 4 besteht aus einem großflächigen Stück, das an einer Seite um eine Achse 11 schwenkbar gelagert ist. Der Schieber 4 ist hier schwenkbar auf einer Grundplatte 12 angeordnet. Die Grundplatte ist hier rechteckig bzw. quadratisch ausgebildet und der Schieber 4 ist schräg zu den Seiten des Quadrats oder Rechtecks angeordnet. Mit Einrichtungen 14, wie etwa Bohrlöchern, kann die Grundplatte 12 an dem Band 16 befestigt werden.

Der Schieber 4 ist, wie in Figur 3 dargestellt, beispielsweise nach vorne hin umklappbar. Um ihn in die Position vorzuspannen, wie sie in Figur 3 dargestellt ist, ist ein Federelement 13 vorgesehen. Dieses Federelement 13 kann auf der Achse 11 angeordnet sein. Während es in Figur 3 zwischen zwei Halterungen der Achse 11 vorgesehen
ist, kann es auch außerhalb einer der beiden Halterungen angeordnet sein. Um die Position des Schiebers 4, wie sie in Figur 3 dargestellt ist, zu definieren, kann ein Anschlag vorgesehen sein, der die Bewegung der Achse 11 oder des Schiebers 4 begrenzt. Die Feder 13 ist dabei so angeordnet, dass sie den Schieber 4 bzw. die Achse 11 gegen den Anschlag drückt.

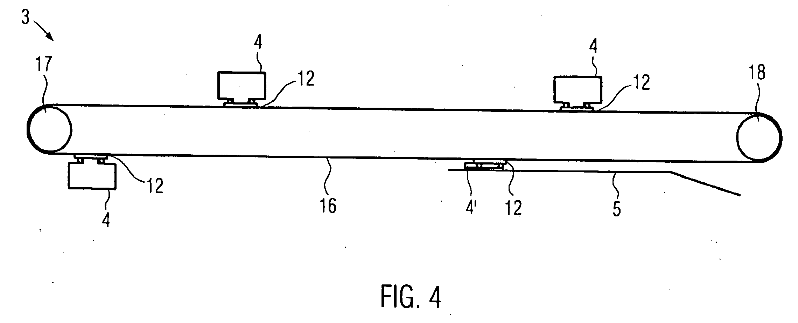

In Figur 4 ist eine seitliche Ansicht einer Schiebervorrichtung 3 gezeigt. An dem Band 16 sind hier vier Schieber 4, 4' angeordnet und können an diesem Band 16 umlaufen. In Figur 4 ist zu erkennen, wie die Schieber 4 mit ihren Grundplatten 12 an dem Band 16 angeordnet sind. Weiter ist in Figur 4 zu erkennen, wie ein Schieber 4' durch eine Führung 5 hochgeklappt ist. Dieses Hochklappen des Schiebers 4' erfolgt entgegen der Vorspannung durch das federnde Element 13.

Die Vorspannung durch das federnde Element 13 ist so gewählt, dass ein Schieber 4 durch den Andruck gegen einen zu schiebenden Gegenstand 2 nicht umklappt, wobei er jedoch bei Auflaufen auf die Führung 5 entgegen der Federkraft umgeklappt wird. Die Führung 5 ist an ihrem rechten Ende so ausgestaltet, dass der Schieber 4 nicht plötzlich freigegeben wird, sondern vielmehr nach und nach in die Schiebeposition zurückgeführt wird, wobei diese Bewegung durch die Vorspannung des Schiebers hier in seine Schiebeposition verursacht wird.

In der hochgeklappten Position können Gegenstände 2 unter dem Schieber 4' hindurchlaufen, ohne von diesem erfasst zu werden.

Bei dem Verfahren werden Gegenstände 2 in Förderrichtung 8 (siehe Fig. 1) auf einem Förderer 6 zugeführt. Ein Schieber 4 a greift an eine Seite des Gegenstandes 2' an und schiebt diesen in Richtung zu dem Förderer 7. Der Schieber 4 a bewegt sich dabei in eine Richtung, die mit der Förderrichtung 8 einen Winkel α einschließt, der kleiner als 90° ist. Der Winkel α in Figur 1 ist ca. 20° bis 25°. Der Schieber 4 a bewegt sich somit mit einer Bewegungskomponente in Richtung der Förderrichtung 8 und mit einer anderen Komponente in einer Richtung senkrecht zur Förderrichtung 8, sodass der Schieber 4 a den Gegenstand 2' seitlich aus dem Strom von Gegenständen herausschiebt. Sobald der Gegenstand 2' auf dem Förderer 7 angelangt ist, läuft der

Schieber 4 a gegen die Führung 5 a, wodurch der Schieber hochgeklappt wird (siehe auch Figur 4, Schieber 4'). In dieser hochgeklappten Position läuft der Schieber 4 a bis kurz vor das Ende der Schiebevorrichtung 3. Dort klappt der Schieber 4 a dann wieder in seine ursprüngliche Lage zurück.

Wie in den Figuren 2 und 4 zu erkennen, läuft der Schieber 4 dann um die Umlenkwalze 18 herum und wird durch die Bewegung des Bandes 16 zurück in Richtung zu dem Förderer 6 bewegt.

Wie in Figur 1 dargestellt, sind parallel nebeneinander drei Schiebereinrichtungen 3 a, 3 b, 3 c vorgesehen, die parallel nebeneinander drei Gegenstände 2', 2", 2'" schieben.

Das Hochklappen der Schieber 4 b, 4 c mit den Führungen 5 b, 5 c ist insofern auch von Bedeutung, als dass der Beutel 2', der von dem Schieber 4 a geschoben wurde, nicht mit den Schiebern 4 b oder 4 c kollidieren soll, wenn der Beutel 2' entlang des Förderers 7 in Richtung 10 unter den Schiebevorrichtungen 3 b, 3 c hindurchgefördert wird.

Mit der Vorrichtung, wie sie in Figur 1 gezeigt ist, ist es möglich, dass mit der Schiebevorrichtung 3 a nur jeder sechste Beutel erfasst und geschoben werden muss. Die beiden anderen Schiebereinrichtungen 3 b und 3 c greifen ebenfalls nur jeden sechsten Beutel, sodass hier insgesamt eine Eins-zu-Eins-Aufteilung in die beiden Ströme von Gegenständen erfolgt. Dadurch sind Durchsatzraten von bis zu mehr als 300, 400 oder 500 Gegenständen pro Minute möglich.

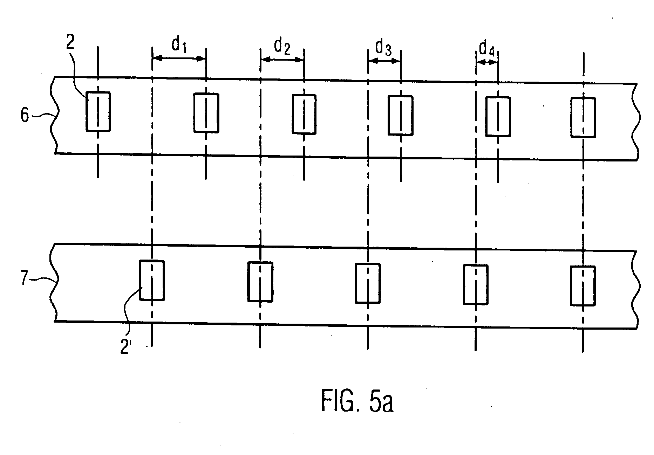

Fig. 5a zeigt Abschnitte der zwei Förderer 6 und 7, die sich stromab der Schieber befinden. Die Gegenstände 2 und 2' befinden sich jeweils auf den verschiedenen Förderern 6, 7. Links sind die Gegenstände auf den Förderern 6, 7 jeweils versetzt angeordnet, da die beiden Produktströme durch das Verschieben von verschiedenen Gegenständen eines Produktstroms hervorgegangen sind. Die beiden Förderer 6, 7 sind weitgehend geradlinig und weisen verschiedene Fördergeschwindigkeiten auf. Dadurch wird der Abstand d1, d2, d3, d4 von zwei Gegenständen auf den beiden

Förderern von links nach rechts immer kleiner. Am Ende der Förderer 6, 7 sind zwei Gegenstände direkt nebeneinander angeordnet. Hier können diese dann in etwa zur gleichen Zeit weitergegeben werden. Statt nur eines Förderers 6 oder 7 kann jeder einzelne dieser beiden Förderer oder auch beide Förderer in zwei oder mehr Abschnitte aufgeteilt sein. So kann der in Fig. 5a untere Förderer 7 z. B. einen ersten Abschnitt aufweisen, der gleich schnell läuft wie der Förderer 6 und auf den die Gegenstände dann aufgeschoben werden. An diesen ersten Förderabschnitt schließt sich dann ein zweiter Förderabschnitt an, der die Gegenstände von dem ersten Abschnitt übernimmt, jedoch eine höhere oder niedrigere Fördergeschwindigkeit als der erste Abschnitt und/oder der Förderer 6 hat, so dass die Gegenstände hierauf die Gegenstände auf dem Förderer 6 einholen oder umgekehrt.

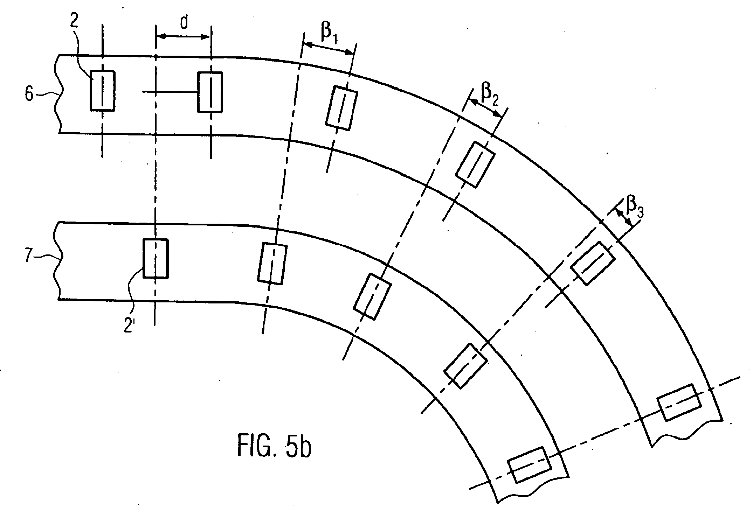

In Fig. 5b eine Ausführungsform gezeigt, bei der die zwei Förderer 6, 7 gekrümmt sind. Dadurch, dass die beiden Förderer 6, 7 verschieden geformte Wege durchlaufen, verändert sich der Winkelversatz β zwischen den Gegenständen 2 und 2' auf den Förderern 6, 7 auch ohne, dass die beiden Förderer 6, 7 eine verschiedene Geschwindigkeit aufweisen (was dennoch aber auch möglich ist). Am Ende der Förderer 6, 7 sind jeweils 2 Gegenstände nebeneinander angeordnet und können sie gut übergeben werden.

Gemäß der Erfindung ist eine Vorrichtung (1) vorgesehen zum Aufteilen eines Stroms von Gegenständen, wie etwa Folienbeuteln (2), in zwei oder mehr Ströme mit einem Förderer (6), auf dem die Gegenstände (2) entlang einer Linie in einer Förderrichtung (8) einlaufen können und entweder mit mindestens einem Schieber (4), mit dem Gegenstände (2) auf dem Förderer (6) relativ zu anderen Gegenständen (2) auf dem Förderer (6) bewegt werden können, wobei der Schieber (4) in einer Richtung bewegt werden kann, die in einem Winkel (α) von weniger als 90° zu der Förderrichtung (8) liegt, oder mit mindestens zwei Schiebern (4a, 4b, 4c), bevorzugterweise mindestens oder genau drei oder vier oder fünf Schiebern (4a, 4b, 4c), mit dem Gegenstände (2', 2", 2"') auf dem Förderer (6) relativ zu anderen Gegenständen (2) auf dem Förderer (6) bewegt werden können.

Gemäß der Erfindung ist ein Verfahren vorgesehen zum Aufteilen eines Stroms von Gegenständen (2), wie etwa Folienbeuteln, in zwei oder mehr Ströme mit den Schritten: Zuführen von den Gegenständen entlang einer Linie in einer Förderrichtung (8) und Schieben von mindestens einem der Gegenstände (2') relativ zu den anderen Gegenständen (2) in einer Richtung, die in einem Winkel von weniger als 90° zu der Förderrichtung (8) liegt. Außerdem ist ein Verfahren vorgesehen zum Aufteilen eines Stroms von Gegenständen, wie etwa Folienbeuteln, in zwei oder mehr Ströme mit den Schritten: Zuführen von den Gegenständen (2) und gleichzeitiges Schieben von mindestens zwei Gegenständen (2', 2", 2"') relativ zu den anderen Gegenständen (2).

## Patentansprüche

1. Vorrichtung (1) zum Aufteilen eines Stroms von Gegenständen, wie etwa Folienbeuteln (2), in zwei oder mehr Ströme mit:
einem Förderer (6), auf dem die Gegenstände (2) entlang einer Linie in einer Förderrichtung (8) einlaufen können und
mindestens einem Schieber (4), mit dem Gegenstände (2) auf dem Förderer (6) relativ zu anderen Gegenständen (2) auf dem Förderer (6) bewegt werden können, wobei der Schieber (4) in einer Richtung bewegt werden kann, die in einem Winkel (α) von weniger als 90° zu der Förderrichtung (8) liegt,
**dadurch gekennzeichnet, dass**
der umklappbar angeordnete Schieber (4) mit einem federnden Element (13) in eine Schiebeposition vorgespannt wird.

2. Vorrichtung nach einem der Ansprüche 1, **dadurch gekennzeichnet, dass** der Winkel (α) weniger als 70°, 60°, 50°, 45°, 40°, 30° oder 20° beträgt.

3. Vorrichtung nach einem der Ansprüche 1 bis 2, **dadurch gekennzeichnet, dass** der Winkel (α) mehr als 5°, 10°, 15° oder 20° beträgt.

4. Vorrichtung nach einem der Ansprüche 1 bis 3, **dadurch gekennzeichnet, dass** die Gegenstände (2) mit dem Schieber (4) auf einen anderen Förderer (7) geschoben werden.

5. Vorrichtung nach Anspruch 4, **dadurch gekennzeichnet, dass** die beiden Förderer (6, 7) oder sich an einen oder beide Förderer anschließende weitere Förderer, so ausgebildet sind, dass zwei Gegenstände auf den beiden oder nachfolgenden Förderern (6, 7) zumindest zu einem bestimmten Zeitpunkt nebeneinander transportiert werden.

6. Vorrichtung nach Anspruch 4 oder 5, **dadurch gekennzeichnet, dass** die beiden Förderer oder ein oder zwei sich anschließende weitere Förderer unterschiedliche Fördergeschwindigkeiten haben.

7. Vorrichtung nach einem der Ansprüche 4, 5 oder 6, **dadurch gekennzeichnet, dass** für die beiden Förderer (6, 7) oder ein oder zwei sich anschließende Förderer verschieden geformte Wege mit verschiedenen Weglängen vorgesehen sind, wie etwa durch Kurven mit verschiedenen Kurvenradien.

8. Vorrichtung nach einem der Ansprüche 1 bis 7, **dadurch gekennzeichnet, dass** die Gegenstände (2) in einer Richtung senkrecht zu der Förderrichtung (8) um mindestens die Ausdehnung der Gegenstände (2) in dieser Richtung geschoben werden können.

9. Vorrichtung nach einem der Ansprüche 1 bis 8, **dadurch gekennzeichnet, dass** der Schieber (4) an einem Band (16) angeordnet ist, das über mindestens zwei Umlenkwalzen (17, 18) geführt ist.

10. Vorrichtung nach Anspruch 9, **dadurch gekennzeichnet, dass** an einem Band (16) mindestens zwei, bevorzugterweise drei oder vier und noch bevorzugterweise fünf oder mehr Schieber (4) angeordnet sind.

11. Vorrichtung nach einem der Ansprüche 1 bis 10, **dadurch gekennzeichnet, dass** mehrere Schieber (4a, 4b, 4c) gleichzeitig verschiedene Gegenstände (2', 2", 2"') bewegen können.

12. Vorrichtung nach Anspruch 11, **dadurch gekennzeichnet, dass** die mehreren Schieber (4) parallel nebeneinander angeordnet sind.

13. Vorrichtung nach einem der Ansprüche 1-12 **dadurch gekennzeichnet, dass** mindestens eine feststehende Führung (5) vorgesehen ist, die den Schieber (4) an einer vorbestimmten Stelle umklappt.

14. Vorrichtung nach einem der Ansprüche 1 - 13 **dadurch gekennzeichnet, dass** ein Sensor zur Erfassung eines Gegenstands vorgesehen ist, mit dem die Bewegung des Schiebers ausgelöst werden kann.

15. Vorrichtung (1) zum Aufteilen eines Stroms von Gegenständen (2), wie etwa Folienbeuteln, in zwei oder mehr Ströme mit:
einem Förderer (6), auf dem die Gegenstände (2) einlaufen können und
mindestens zwei Schiebern (4a, 4b, 4c), bevorzugterweise mindestens oder genau drei oder vier oder fünf Schiebern (4a, 4b, 4c), mit dem Gegenstände (2', 2", 2"') auf dem Förderer (6) relativ zu anderen Gegenständen (2) auf dem Förderer (6) bewegt werden können, **dadurch gekennzeichnet, dass**
mehrere Schieber durch verschiedene Mittel angetrieben werden und die Schieber umklappbar angeordnet sind.

16. Vorrichtung nach Anspruch 15, **dadurch gekennzeichnet, dass** die Schieber (4) nebeneinander, vorzugsweise parallel angeordnet sind.

17. Verfahren zum Aufteilen eines Stroms von Gegenständen (2), wie etwa Folienbeuteln, in zwei oder mehr Ströme mit den Schritten:
Zuführen von Gegenständen entlang einer Linie in einer Förderrichtung (8) und
Schieben von mindestens einem der Gegenstände (2') relativ zu den anderen Gegenständen (2) in einer Richtung, die in einem Winkel von weniger als 90° zu der Förderrichtung (8) liegt,
**dadurch gekennzeichnet, dass** das Schieben mit einem umklappbaren und mit einem federnden Element (13) in eine Schiebeposition vorgespannten Schieber erfolgt.

18. Verfahren zum Aufteilen eines Stroms von Gegenständen, wie etwa Folienbeuteln, in zwei oder mehr Ströme mit den Schritten:
Zuführen von den Gegenständen (2) und
gleichzeitiges Schieben von mindestens zwei Gegenständen (2', 2", 2"') relativ zu den anderen Gegenständen (2),
**dadurch gekennzeichnet, dass** das Schieben mit einem umklappbaren und mit einem federnden Element (13) in eine Schiebeposition vorgespannten Schieber erfolgt.

## Claims

1. Device (1) for dividing a flow of objects, such as foil bags (2), into two or more flows with:
a conveyor (6), on which the objects (2) can arrive along a line in a conveying direction (8) and
at least one slide (4), with which objects (2) on the conveyor (6) can be moved relative to other objects (2) on the conveyor (6), wherein the slide (4) can be moved in a direction, which lies at an angle (α) of less than 90° to the conveying direction (8),
**characterised in that**
the slide (4) arranged for folding back is pretensioned in a sliding position by a springy element (13).

2. Device according to Claim 1, **characterised in that** the angle (α) is less than 70°, 60°, 50°, 45°, 40°, 30° or 20°.

3. Device according to one of the Claims 1 or 2, **characterised in that** the angle (α) is more than 5°, 10°, 15° or 20°.

4. Device according to one of the Claims 1 to 3, **characterised in that** the objects (2) are displaced with the slide (4) onto another conveyor (7).

5. Device according to Claim 4, **characterised in that** the two conveyors (6, 7) or other conveyors following one or both conveyor(s) are configured such that two objects on the two or on the following conveyors (6, 7) are transported adjacently to one another at least at a certain point in time.

6. Device according to Claim 4 or 5, **characterised in that** the two conveyors or one or two other following conveyor(s) have different conveying speeds.

7. Device according to one of the Claims 4, 5 or 6, **characterised in that** for the two conveyors (6, 7) or one or two following conveyor(s) differently shaped paths with different path lengths are provided, such as due to curves with different radii.

8. Device according to one of the Claims 1 to 7, **characterised in that** the objects (2) can be displaced in a direction perpendicular to the conveying direction (8) by at least the extent of the objects (2) in this direction.

9. Device according to one of the Claims 1 to 8, **characterised in that** the slide (4) is arranged on a band (16) which is guided over at least two deflection rollers (17, 18).

10. Device according to Claim 9, **characterised in that** on a band (16) at least two, preferably three or four and more preferably five or more slides (4) are arranged.

11. Device according to one of the Claims 1 to 10, **characterised in that** many slides (4a, 4b, 4c) can move different objects (2', 2", 2"') simultaneously.

12. Device according to Claim 11, **characterised in that** the many slides (4) are arranged adjacent and parallel to one another.

13. Device according to one of the Claims 1 to 12, **characterised in that** at least one stationary guide (5) is provided which folds back the slide (4) at a predetermined point.

14. Device according to one of the Claims 1 to 13, **characterized in that** a sensor for sensing an object is provided with which the movement of the slide can be triggered.

15. Device (1) for dividing a flow of objects (2), such as foil bags, into two or more flows with:
a conveyor (6) on which the objects (2) can arrive and
at least two slides (4a, 4b, 4c), preferably at least or precisely three or four or five slides (4a, 4b, 4c), with which objects (2', 2", 2"') can be moved on the conveyor (6) relative to other objects (2) on the conveyor (6),
**characterised in that**
many slides are driven by various means and the slides are arranged for folding back.

16. Device according to Claim 15, **characterised in that** the slides (4) are arranged adjacent and preferably parallel to one another.

17. Method of dividing a flow of objects (2), such as foil bags, into two or more flows with the steps:
passing of objects along a line in a conveying direction (8), and
displacement of at least one of the objects (2') relative to the other objects (2) in a direction which lies at an angle of less than 90° to the conveying direction (8),
**characterized in that** displacement is affected by a slide which can be folded back and which is pretensioned in a sliding position by a springy element (13).

18. Method of dividing a flow of objects, such as foil bags, into two or more flows with the steps:
supply of objects (2), and
simultaneous displacement of at least two objects (2', 2", 2"') relative to the other objects (2),
**characterized in that** displacement is affected by a slide which can be folded back and which is pretensioned in a sliding position by a springy element (13).

## Revendications

1. Dispositif (1) destiné à répartir un flux d'objets, tels que des sacs en plastique (2), en deux flux ou plus, avec :
un convoyeur (6), sur lequel les objets (2) peuvent arriver le long d'une ligne dans une direction de convoyage (8) et
au moins un coulisseau (4), avec lequel les objets (2) sur le convoyeur (6) peuvent être déplacés par rapport aux autres objets (2) sur le convoyeur (6), le coulisseau (4) pouvant être déplacé dans une direction qui fait un angle (α) inférieur à 90 ° par rapport à la direction de convoyage (8), **caractérisé en ce que**
le coulisseau (4) agencé à rabattement est précontraint en position de coulissement à l'aide d'un élément à ressort (13).

2. Dispositif selon la revendication 1, **caractérisé en ce que** l'angle (α) est inférieur à 70 °, 60 °, 50 °, 45 °, 40 °, 30 ° ou 20 °.

3. Dispositif selon l'une quelconque des revendications 1 à 2, **caractérisé en ce que** l'angle (α) est supérieur à 5 °, 10 °, 15 ° ou 20 °.

4. Dispositif selon l'une quelconque des revendications 1 à 3, **caractérisé en ce que** les objets (2) sont poussés sur un autre convoyeur (7) avec le coulisseau (4).

5. Dispositif selon la revendication 4, **caractérisé en ce que** les deux convoyeurs (6, 7) ou d'autres convoyeurs raccordés à l'un ou aux deux convoyeurs sont conçus de sorte que deux objets sur les deux convoyeurs ou les convoyeurs suivants (6, 7) sont transportés l'un à côté de l'autre au moins à un moment donné.

6. Dispositif selon la revendication 4 ou 5, **caractérisé en ce que** les deux convoyeurs ou les autres convoyeurs raccordés à l'un ou aux deux convoyeurs ont des vitesses de convoyage différentes.

7. Dispositif selon l'une quelconque des revendications 4, 5 ou 6, **caractérisé en ce que** différents chemins formés ayant différentes longueurs de chemin sont prévus pour les deux convoyeurs (6, 7) ou bien un ou deux convoyeurs se raccordant, par exemple des courbes ayant différents rayons de courbure.

8. Dispositif selon l'une quelconque des revendications 1 à 7, **caractérisé en ce que** les objets (2) peuvent être poussés dans une direction perpendiculaire à la direction de convoyage (8) pour au moins étirer les objets (2) dans cette direction.

9. Dispositif selon l'une quelconque des revendications 1 à 8, **caractérisé en ce que** le coulisseau (4) est agencé au niveau d'une bande (16) qui est guidée sur au moins deux cylindres déflecteurs (17, 18).

10. Dispositif selon la revendication 9, **caractérisé en ce qu'**au moins deux, de préférence trois ou quatre et, mieux encore, cinq coulisseaux (4) ou plus sont agencés au niveau d'une bande (16).

11. Dispositif selon l'une quelconque des revendications 1 à 10, **caractérisé en ce que** de multiples coulisseaux (4a, 4b, 4c) peuvent déplacer divers objets (2', 2", 2'"') en même temps.

12. Dispositif selon la revendication 11, **caractérisé en ce que** les multiples coulisseaux (4) sont agencés en parallèle l'un à côté de l'autre.

13. Dispositif selon l'une quelconque des revendications 1 à 12, **caractérisé en ce qu'**il est prévu au moins un guidage fixe (5), qui rabat le coulisseau (4) à un endroit prédéterminé.

14. Dispositif selon l'une quelconque des revendications 1 à 13, **caractérisé en ce qu'**il est prévu un capteur pour enregistrer un objet, avec lequel le déplacement du coulisseau peut être déclenché.

15. Dispositif (1) destiné à répartir un flux d'objets (2), tels que des sacs en plastique, en deux flux ou plus, avec :
un convoyeur (6) sur lequel les objets (2) peuvent arriver et
au moins deux coulisseaux (4a, 4b, 4c), de préférence au moins ou précisément trois, quatre ou cinq coulisseaux (4a, 4b, 4c), peuvent être déplacés avec les objets (2', 2", 2"') sur le convoyeur (6) par rapport aux autres objets (2) sur le convoyeur (6),
**caractérisé en ce que**
de multiples coulisseaux sont entraînés par divers moyens et les coulisseaux sont agencés à rabattement.

16. Dispositif selon la revendication 15, **caractérisé en ce que** les coulisseaux (4) sont agencés l'un à côté de l'autre, de préférence parallèlement l'un à l'autre.

17. Procédé pour répartir un flux d'objets (2), tels que des sacs en plastique, en deux flux ou plus, comprenant les étapes consistant à :
amener des objets le long d'une ligne dans une direction de convoyage (8), et
pousser au moins un des objets (2') par rapport aux autres objets (2) dans une direction, qui fait un angle inférieur à 90 ° avec la direction de convoyage (8),
**caractérisé en ce que** la poussée s'effectue avec un coulisseau rabattable et précontraint en position de coulissement avec un élément à ressort (13).

18. Procédé pour répartir un flux d'objets, tels que des sacs en plastique, en deux flux ou plus, comprenant les étapes consistant à :
amener les objets (2), et
pousser simultanément au moins deux objets (2', 2", 2"') par rapport aux autres objets (2),
**caractérisé en ce que** la poussée s'effectue avec un coulisseau rabattable et précontraint en position de coulissement avec un élément à ressort (13).
